(19) **Europäisches Patentamt / European Patent Office / Office européen des brevets**

(11) **EP 2 638 660 B1**

(12) **FASCICULE DE BREVET EUROPEEN**

(45) Date de publication et mention de la délivrance du brevet:
**07.01.2015 Bulletin 2015/02**

(21) Numéro de dépôt: **11794534.5**

(22) Date de dépôt: **08.11.2011**

(51) Int Cl.:
**H04L 9/06** (2006.01)  **H04L 9/00** (2006.01)
**H04L 9/28** (2006.01)

(86) Numéro de dépôt international:
**PCT/FR2011/052602**

(87) Numéro de publication internationale:
**WO 2012/062994 (18.05.2012 Gazette 2012/20)**

(54) **PROTECTION CONTRE LES ECOUTES PASSIVES**

SCHUTZ GEGEN PASSIVES AUSSPÄHEN

PROTECTION AGAINST PASSIVE SNIFFING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.11.2010 FR 1059208**

(43) Date de publication de la demande:
**18.09.2013 Bulletin 2013/38**

(73) Titulaire: **MORPHO**
**92130 Issy Les Moulineaux (FR)**

(72) Inventeurs:
- **CHABANNE, Hervé**
  **F-92130 Issy-les-Moulineaux (FR)**
- **BRINGER, Julien**
  **F-92130 Issy-les-Moulineaux (FR)**

- **LE, Thanh, Ha**
  **F-92130 Issy-les-Moulineaux (FR)**

(74) Mandataire: **Cabinet Plasseraud**
**52, rue de la Victoire**
**75440 Paris Cedex 09 (FR)**

(56) Documents cités:
**EP-A2- 2 020 773     WO-A1-2008/064704**
**FR-A1- 2 941 342     US-A1- 2005 232 430**
**US-A1- 2006 056 622**

- **MESSERGES T S: "SECURING THE AES FINALISTS AGAINST POWER ANALYSIS ATTACKS", FAST SOFTWARE ENCRYPTION. INTERNATIONAL WORKSHOP, XX, XX, vol. 1978, 1 avril 2000 (2000-04-01), pages 150-164, XP001040960,**

**Description**

L'invention concerne la protection des algorithmes cryptographiques contre les écoutes passives.

Un algorithme cryptographique est un algorithme qui vise à protéger une information, en assurant par exemple sa confidentialité, son authenticité, ou son intégrité, grâce aux mathématiques. Un algorithme cryptographique s'appuie souvent sur une ou plusieurs clés, qui peuvent être notamment secrètes, privées, ou publiques. Certains algorithmes cryptographiques n'utilisent pas de clé, c'est le cas notamment de certaines fonctions de hachage (telles que les fonctions SHA-1, MD5, SHA-256, RIPEMD-160, etc.). Parmi les algorithmes cryptographiques on trouve notamment des algorithmes de chiffrement (qui permettent de rendre une information inintelligible) et des algorithmes de déchiffrement (qui permettent de récupérer l'information d'origine à partir d'une information chiffrée), des algorithmes de signature électronique, de vérification de signature, d'authentification, de vérification d'authentification, etc. Parmi les algorithmes cryptographiques s'appuyant sur des clés, certains sont dits symétriques (par exemple les algorithmes DES, 3DES, AES, RC4, HMAC, etc.). Certains algorithmes symétriques sont spécialisés (par exemple l'algorithme HMAC sert pour la signature/vérification de signature mais pas pour le chiffrement/déchiffrement). Les algorithmes symétriques tirent leur nom du fait qu'ils utilisent la même clé (on parle généralement de clé secrète) pour chiffrer et pour déchiffrer, ou encore pour signer et vérifier une signature, etc. Ainsi, les algorithmes cryptographiques symétriques imposent ils à deux parties les utilisant pour sécuriser leurs communications de partager des clés. L'algorithme AES (Advanced Encryption Standard) est notable car il est l'algorithme qui a été choisi en 2000 par le NIST afin de devenir l'algorithme de chiffrement symétrique standard pour le gouvernement des Etats-Unis d'Amérique. D'autres algorithmes cryptographiques sont qualifiés d'asymétriques (par exemple les algorithmes DSA, RSA, les courbes elliptiques, etc.) car une clé différente est utilisée par les parties à une communication. Chaque partie dispose d'une clé privée et d'une clé publique associée. Par exemple une partie peut utiliser une de ses clés privées pour signer une information, et c'est une clé publique correspondante qui est utilisée par l'autre partie pour vérifier la signature, ou encore une partie peut utiliser une clé publique appartenant à une autre partie pour chiffrer une information, et l'autre partie peut alors utiliser sa clé privée correspondante pour déchiffrer l'information.

Les algorithmes cryptographiques sont souvent décrits de façon très précise dans des spécifications accessibles à tous, la sécurité d'un algorithme cryptographique n'étant généralement pas liée au caractère secret ou non de son fonctionnement (les algorithmes qui ne sont présumés sûrs qu'en raison de leur caractère secret finissent souvent par être cassés par ingénierie inverse). Les spécifications permettent de déterminer ce qu'un algorithme doit produire en sortie lorsque l'on lui donne une certaine information en entrée. Ceci permet de s'assurer de l'interopérabilité de l'algorithme cryptographique, c'est-à-dire que des implémentations distinctes doivent pouvoir fonctionner entre elles. Par exemple, on peut légitimement s'attendre à ce qu'une information chiffrée par toute implémentation d'un algorithme de chiffrement puisse être déchiffrée par toute implémentation de l'algorithme de déchiffrement correspondant. Cependant, ceci ne signifie pas qu'il n'existe qu'une implémentation possible de chaque algorithme cryptographique. Au contraire, il existe des multitudes d'implémentations possibles pour chaque algorithme cryptographique, de même qu'il existe des multitudes de manières différentes d'effectuer un même calcul. Par exemple, pour calculer $X^2+2X+1$, on peut notamment calculer X*X, puis 2*X, puis ajouter les deux termes puis ajouter 1, ou bien calculer X+1, multiplier le résultat par X, puis ajouter 1, ou encore calculer X+1 et élever le résultat au carré.

On pourrait penser que la sécurité d'un algorithme cryptographique ne dépend que de sa définition mathématique (et des éventuelles clés qui sont utilisées, lorsque ces dernières sont secrètes ou privées), telle qu'elle ressort d'une spécification, et non de la façon exacte dont il calcule le résultat défini dans la spécification. En réalité, il n'en est rien, en général. Il s'avère que la sécurité d'une mise en oeuvre particulière d'un algorithme cryptographique ne dépend pas seulement de l'algorithme cryptographique lui-même, mais également de la façon dont il est implémenté, et d'autres facteurs tels que les caractéristiques du dispositif électronique chargé de l'exécuter.

Il est notamment bien connu que lorsqu'un dispositif électronique non protégé exécute un logiciel mettant en oeuvre un algorithme cryptographique de manière « naïve » c'est-à-dire d'une manière qui se contente de produire le résultat numérique attendu selon la spécification (tel qu'un résultat de chiffrement) à partir d'une entrée donnée, il est généralement possible d'effectuer une écoute passive du dispositif électronique et d'obtenir des informations critiques sur le déroulement de l'algorithme cryptographique. L'écoute passive présente l'avantage d'être non invasive. Le dispositif électronique n'est pas endommagé, et son propriétaire ne se rend pas nécessairement compte qu'il a été attaqué. Ainsi, le dispositif a pu être subtilisé et rendu sans que son propriétaire ne le soupçonne, ou simplement utilisé en l'absence du propriétaire, voire espionné en présence du propriétaire, sans que ce dernier ne le remarque (par exemple par un module dissimulé entre le dispositif électronique et son alimentation électrique). Ainsi, le propriétaire d'un dispositif électronique dont une clé RSA privée à été extraite par un attaquant n'est pas amené à révoquer sa paire de clés RSA (il n'a aucune raison de penser qu'il a été attaqué). L'attaquant peut ensuite utiliser librement la clé RSA privée jusqu'à ce que le propriétaire finisse par se rendre compte que des opérations qu'il n'a pas effectuées (par exemple des transferts de fonds électroniques, ou des signatures électroniques de contrats), lui sont prétendument attribuées, ou qu'un tiers a manifestement eu accès à des informations confidentielles (par exemple un concurrent répondant à plusieurs reprises à de mêmes appels d'offres en étant de très peu le moins disant).

Une écoute passive peut consister par exemple en une analyse du rayonnement électromagnétique émis par le dispositif lors de l'exécution du logiciel (par exemple dans le cadre d'une attaque de type TEMPEST, qui se concentre en général principalement sur la capture d'écrans cathodiques, mais peut être généralisée). En effet, le rayonnement électromagnétique d'un dispositif électronique, par exemple d'un processeur, dépend de ce que ce dispositif est en train d'effectuer, par exemple d'une instruction que le processeur est en train d'exécuter ou d'une donnée que le processeur est en train de manipuler. Il est également possible d'analyser d'autres informations, telles que la consommation électrique instantanée d'un dispositif électronique, et de distinguer ainsi les tâches accomplies en fonction de la consommation électrique qu'elles requièrent. On peut aussi mesurer les vibrations émises (certains composants sont susceptibles de vibrer, et ce d'une manière différente selon ce qu'ils font), ou encore les variations de température, etc.

Une écoute passive peut également comprendre la mesure d'une durée d'exécution de certaines opérations pour en tirer des conclusions lorsque ces opérations ne sont pas protégées contre les attaques dites « timing attacks ». Par exemple, une opération de vérification de mot de passe non protégée contre les « timing attacks » pourrait comparer les octets d'un mot de passe attendu avec un mot de passe soumis, octet par octet, et retourner une erreur dès qu'un octet est différent. Un attaquant pourrait ainsi, selon le temps que met la fonction de vérification de mot de passe pour répondre que le mot de passe est erroné, déduire que les N premiers octets sont corrects, et refaire une tentative de présentation de mot de passe en ne modifiant que le $N+1^{ème}$ octet, et ce jusqu'à ce que le temps de réponse ralentisse un peu, ce qui serait le signe que le $N+1^{ème}$ octet est désormais correct, pour passer au $N+2^{ème}$ octet, et ainsi de suite jusqu'à obtention du mot de passe complet. Ainsi, pour retrouver un mot de passe de longueur K (en octets), et ce même si le mot de passe est robuste (pas d'attaques par dictionnaire possible), on passe d'une complexité moyenne de $\frac{1}{2}*(2^8)^K$ à une complexité moyenne de $K*2^7$, ce qui est beaucoup plus simple. Afin d'éviter les « timing attacks », il est possible de faire en sorte que toutes les opérations sensibles aient une durée d'exécution constante, ou encore que la durée, bien que variable, ne renseigne pas sur ce qui se déroule durant l'opération. Des contremesures complémentaires sont également possibles, notamment dans l'exemple précédent on pourrait bloquer le mot de passe après un certain nombre de tentatives erronées (c'est ce qui se fait habituellement pour les codes PIN). Mais ces mesures complémentaires ne sont généralement pas un substitut à la protection contre les « timing attacks », mais simplement un complément. Par exemple, si l'on imagine qu'une carte bancaire bloque un code PIN après cinq essais infructueux mais implémente une vérification non protégée telle que c'est décrit ci-dessus, une personne (par exemple un adolescent, un employé, etc.) pourrait subtiliser une carte bancaire (celle de sa mère, de son patron, etc.) à chaque fois que son titulaire légitime a effectué une transaction, par exemple le paiement d'un repas d'affaires au restaurant (ce qui réinitialise le compteur d'essais infructueux), et faire à chaque fois quatre tentatives. Pour un code PIN de quatre chiffres décimaux, il faudrait alors en moyenne vingt tentatives (c'est-à-dire subtiliser la carte cinq fois), et au maximum quarante tentatives pour trouver le PIN code, ce qui serait assez facile à mettre en oeuvre.

Une écoute passive élémentaire peut consister simplement à identifier une caractéristique donnée en fonction d'une mesure donnée sur le dispositif électronique ciblé. C'est le cas par exemple des attaques dites SPA (pour Simple Power Analysis). Par exemple, lors d'une exponentiation modulaire effectuée dans une implémentation « naïve » de l'algorithme RSA, la consommation électrique est très différente lorsqu'un bit de l'exposant est égal à 1 (forte consommation) et lorsque ce bit est égal à 0 (consommation plus faible). En effet, dans les implémentations communes, un bit à 1 implique à la fois une opération d'élévation au carré et une opération de multiplication (dite « square and multiply », alors qu'un bit à 0 n'implique qu'une opération d'élévation au carré. On peut ainsi, en observant la trace de la consommation électrique lors de l'exponentiation modulaire, repérer les séries de 1 et de 0 de l'exposant, qui correspondent à des fluctuations de consommation électrique. Or l'exposant RSA, dans le cas où il s'agit d'un exposant privé, est une donnée extrêmement confidentielle constitutive de la clé privée RSA, qui en général n'est pas censée être connue de quiconque en dehors du dispositif électronique. Obtenir la clé privée de signature d'une personne permet ainsi de signer en son nom, obtenir sa clé privée de déchiffrement permet de déchiffrer ses messages.

Cependant, ces écoutes (simples à mettre en oeuvre) ne sont pas toujours efficaces. On connaît des écoutes plus élaborées, telles que les attaques dites DPA (pour Differential Power Analysis), dans lesquelles un attaquant exécute un algorithme cryptographique à de multiples reprises, et enregistre à chaque fois les traces produites (par exemple les traces de consommation de courant). Par la suite l'attaquant effectue des calculs statistiques sur la base des multiples enregistrements, et obtient des informations d'une façon plus fiable et plus difficile à empêcher.

Afin de se prémunir contre ces attaques, il est possible de sécuriser le dispositif électronique lui-même. Par exemple, on peut superposer un bruit sur l'alimentation électrique afin de rendre son exploitation plus difficile, lisser la consommation électrique (par exemple avec des condensateurs), limiter les émissions électromagnétiques par des blindages adéquats, etc. On peut aussi utiliser une horloge interne particulière, ayant pour caractéristique d'avoir une fréquence de fonctionnement variable de manière aléatoire, ce qui rend les mesures difficiles à exploiter (les opérations de l'algorithme cryptographique étant alors effectuées à une cadence qui ne cesse de varier, et qui est a priori inconnue de l'attaquant). Il existe également d'autres techniques, consistant par exemple à contrôler l'accès physique et/ou l'accès logique au dispositif électronique. Par exemple, les cartes à puces mettant en oeuvre des algorithmes cryptographiques à clé privée protègent généralement les opérations concernées par un code PIN. Ainsi, une personne qui volerait temporairement la carte à puce en espérant en extraire la clé privée puis rendre la carte à son propriétaire sans qu'il ne s'en rende compte, ne pourrait exécuter l'algorithme concerné sans présenter le bon code PIN (qu'un utilisateur averti apprend par coeur et ne communique à personne), et ne serait donc pas en mesure d'effectuer l'attaque.

Ces techniques de contremesure sont utiles, mais généralement insuffisantes à elles seules, car elles ne protègent pas contre tous les scénarios d'attaques. Une autre méthode de protection consiste à utiliser un procédé de sécurisation de l'algorithme cryptographique, consistant à implémenter l'algorithme d'une manière telle qu'il génère le minimum de fluctuations (électriques ou autres).

Par exemple, il est possible de modifier l'implémentation d'un algorithme RSA utilisant une clé privée de façon à ce qu'il effectue des opérations ayant la même signature (électrique, électromagnétique, etc.) lors d'un bit 1 ou lors d'un bit 0 dans l'exposant privé de la clé privée. Par exemple on peut effectuer un « square and multiply » quoi qu'il en soit, le résultat de l'opération de multiplication n'étant utilisé que dans le cas où le bit est à 1. Il faut évidemment être très vigilant, et s'arranger pour que l'implémentation soit aussi symétrique que possible. Par exemple s'il y a un test vérifiant que le résultat de la multiplication doit ou non être utilisé, il faut que ce test se comporte de la même manière quelle que soit son issue (ou d'une moins d'une manière aussi proche que possible), sinon une écoute passive pourrait cibler ce test afin de déterminer s'il s'agissait d'un bit à 0 ou d'un bit à 1.

Un autre procédé de sécurisation (qui peut être complémentaire du précédent) consiste à masquer les données sensibles. Les données sensibles peuvent être par exemple des clés cryptographiques, et/ou un message d'entrée devant par exemple être chiffré par l'algorithme cryptographique, et/ou certaines données intermédiaires manipulées durant l'exécution de l'algorithme cryptographique. En effet, dans certains cas l'attaquant peut connaître voire choisir un message d'entrée à traiter par l'algorithme cryptographique, et faire des prédictions bien plus précises sur le calcul en cours. Le fait que le message d'entrée et/ou les données intermédiaires soient masqués d'une manière a priori imprévisible par l'attaquant lui retire ainsi une partie de l'information et peut ainsi compliquer singulièrement l'attaque. De plus, pour peu que le masquage soit différent lors de chaque utilisation de l'algorithme cryptographique, l'analyse statistique peut être compliquée. Par exemple, plusieurs procédés de protection par masquage de l'algorithme AES ont été proposés pour se prémunir des attaques par canaux cachés. Une solution traditionnelle est un masquage du type additif où les données manipulées x sont remplacées par des données masquées x + m (+ désignant ici le ou exclusif). Cela permet de passer facilement à travers les opérations linéaires de l'algorithme. Les tables (non-linéaire) de substitution S[] sont alors remplacées par des tables masquées générées à la volée après le tirage d'un nouveau masque (ou toutes pré-stockées en mémoire, si la quantité de mémoire le permet). Ainsi, une opération non linéaire masquée correspondant à une table de substitution masquée S'[], appliquée à une donnée x masquée par un masque aléatoire $m_1$ peut s'écrire sous la forme:

$$y' = S'[x + m_1] = y + m_2 = S[x] + m_2$$

$m_2$ étant un masque aléatoire correspondant, masquant la valeur de sortie de la table de substitution. En fin d'algorithme, on démasque le résultat pour obtenir le résultat final (donnée originale chiffrée et non masquée).

Les attaques parviennent parfois néanmoins à surmonter les difficultés induites par les masquages de l'état de l'art. Notamment, certaines attaques telles que les attaques HO-DPA (High Order Differential Power Analysis) peuvent s'avérer particulièrement difficiles à éviter dans certaines circonstances. Ceci est expliqué notamment dans l'article « On Second-Order Differential Power Analysis » de Marc Joye, Pascal Paillier et Berry Schoenmakers, publié dans Cryptographic Hardware and Embedded Systems, CHES 2005, Lecture Notes in Computer Science 3659 (2005) 293-308, Springer-Verlag. Ainsi, lorsque l'attaquant parvient à corréler une consommation de puissance (ou une autre information de ce type) plus d'une fois par calcul, il peut parfois s'affranchir du masquage.

L'invention vient améliorer la situation.

L'invention concerne un procédé de sécurisation de l'exécution d'un algorithme cryptographique contre des écoutes passives, le procédé mettant en oeuvre un masquage de données traitées par l'algorithme cryptographique. Le masquage desdites données comprend une étape de transformation de type x'=x.L+c, x étant une donnée à masquer (telle qu'une donnée d'entrée de l'algorithme cryptographique, une donnée sensible intermédiaire, ou encore une clé), x' étant une donnée masquée correspondante, c étant un mot de code compris dans un code linéaire C, et L étant une matrice composée de vecteurs linéairement indépendants non compris dans le code linéaire C. Le procédé peut consister en une implémentation modifiée de l'algorithme, par exemple en un algorithme fonctionnellement équivalent (c'est-à-dire qui produit la même sortie pour des entrées identiques) mais comprenant en son sein au moins une étape de masquage par transformation (telle qu'un codage linéaire) et au moins une étape correspondante de démasquage par décodage. L'implémentation peut être une implémentation logicielle. Il peut également s'agir d'une implémentation sous forme électronique, par exemple une implémentation micro-codée, une implémentation FPGA, une implémentation ASIC, ou encore une implémentation par développement d'un circuit ad hoc. L'implémentation logicielle est généralement la plus simple à mettre en oeuvre, mais elle est souvent moins performante en termes de rapidité d'exécution.

Le procédé est avantageux, car il permet de se protéger plus efficacement contre les attaques par écoute passive. De plus, contrairement à du masquage traditionnel (de type one-time pad), il permet d'utiliser plusieurs fois le même masque. Utiliser plusieurs fois le même masque (en one-time pad) permet souvent à un attaquant de s'affranchir du masque. En revanche avec le masquage proposé dans l'invention, on peut utiliser plusieurs fois le même masque, tant que le nombre de positions interceptées reste sous une borne de sécurité donnée.

Le procédé est également avantageux en ce que la transformation de type x.L+c permet de détecter certaines fautes, essentiellement à la fin de l'algorithme (mais il est aussi possible d'effectuer une détection de faute en cours d'algorithme). En effet, si c est connu, à la réception d'un résultat y, on peut vérifier que y+c est bien de la forme x.L pour un certain x.

Selon un mode de réalisation, on choisit le mot de code c aléatoirement lors de chaque exécution de l'algorithme cryptographique. Modifier le mot de code c permet de rendre plus complexe une attaque éventuelle, et il est avantageux de ne pas le réutiliser trop souvent.

Selon un mode de réalisation, on choisit la matrice L aléatoirement une seule fois pour toutes les exécutions de l'algorithme cryptographique. Ceci est avantageux car la génération de cette matrice est typiquement assez lente et peut être pénalisante d'un point de vue de la rapidité de calcul si elle est répétée trop souvent. De plus, le mot de code c ajoute déjà une certaine variabilité qui rend l'attaque très complexe. Changer de matrice L de temps à autres peut néanmoins être opportun (sécurité accrue). Par exemple, on pourrait envisager de générer une nouvelle matrice L à chaque mise sous tension d'un dispositif mettant en oeuvre le procédé de sécurisation, pour les dispositifs qui restent généralement sous tension assez longtemps. Dans le cas d'une carte à puce typique, ceci ne serait pas très pertinent car les cartes à puces sont rarement équipées d'une batterie ou autre source d'énergie électrique, et sont donc typiquement mises hors tension à la fin de chaque transaction (une transaction se concluant généralement par un retrait de la carte à puce d'un terminal). Pour une carte à puce, on pourrait prévoir un compteur incrémenté à chaque mise sous tension et générer une nouvelle matrice à chaque fois que le compteur atteint un certain seuil (par exemple la valeur 20). On pourrait également prévoir une nouvelle génération de matrice lorsque la carte est utilisée dans certains contextes. Par exemple lorsqu'une carte bancaire est complètement avalée par un distributeur de billets, et que la transaction prend un temps important, ne serait-ce que pour des raisons mécaniques de comptage de billets de banque, le temps peut être mis à profit pour une génération de matrice. Ou encore lorsqu'une carte à puce utilisant une technologie sans contact pour servir de titre de transport dans les transports en commun (métro / bus etc.) est rechargée, par exemple une fois par mois. A contrario lors d'une transaction rapide (par exemple l'achat d'une baguette de pain avec une carte bancaire sans contact dans une boulangerie, le paiement d'un péage sur une autoroute, ou l'utilisation d'une carte à puce sans contact pour passer un portillon de métro), la génération d'une nouvelle matrice ne serait sans doute pas appropriée, à moins de mettre en place des protocoles de communication beaucoup plus rapides que ceux que l'on connaît aujourd'hui. La discrimination des transactions financières pourrait se faire par exemple en fonction de leur montant (on pourrait par exemple décider que pour une transaction inférieure à 15 euros, il est interdit de générer une nouvelle matrice). On pourrait également utiliser des champs spéciaux pour reconnaître les types de transactions, cependant selon le contexte ceci pourrait impliquer des changements d'architecture rédhibitoires (par exemple au niveau des réseaux informatiques bancaires, fortement normalisés en général).

Selon un mode de réalisation, on effectue le masquage (et donc la transformation) avant la mise en oeuvre de l'algorithme cryptographique (à savoir l'algorithme cryptographique avant sa sécurisation par le procédé selon l'invention), et l'on effectue une opération de démasquage après la mise en oeuvre de l'algorithme cryptographique. Ceci est avantageux, car l'algorithme cryptographique opère alors en mode masqué de bout en bout. Cependant, il est également possible de ne se concentrer que sur certaines parties de l'algorithme cryptographique (en ne masquant par exemple que certaines routines très sensibles). Il est possible de ne masquer que les opérations linéaires, réécrites en conséquence (typiquement $f'(x.L)=f(x).L$), ce qui permet de minimiser les modifications apportées à l'algorithme cryptographique, cependant la sécurisation est alors parfois quelque peu dégradée. Le démasquage peut se faire par décodage, par exemple par application d'une matrice de parité du code linéaire.

Selon un mode de réalisation, l'algorithme cryptographique est un algorithme mettant en oeuvre une opération non linéaire S (telle qu'une S-Box de l'algorithme DES ou de Blowfish, ou encore une opération non linéaire de l'algorithme AES). On remplace l'opération non linéaire S par une opération non linéaire S' telle que $S'(x.L+c) = S(x).L+c'$, c' étant un mot de code du code linéaire C. En réalité, presque tous les algorithmes cryptographiques mettent en oeuvre des opérations non-linéaires, car un algorithme linéaire possède des propriétés telles qu'il est généralement très prédictible, ce qui est typiquement le contraire de ce que l'on attend d'un algorithme cryptographique. Par exemple si un algorithme de chiffrement était linéaire, on connaîtrait le chiffrement de la somme de deux messages si l'on connaissait le chiffrement de chacun des messages, ce qui est en principe inacceptable. Ce mode de réalisation est donc utile si l'on souhaite sécuriser un algorithme cryptographique non linéaire de bout en bout, puisqu'il permet de résoudre le problème du démasquage en présence d'opérations non linéaires, cas qui est très fréquent.

Selon un mode de réalisation, l'algorithme cryptographique comprend plusieurs tours, chaque tour comprenant une même opération non linéaire S, et l'opération non linéaire S est remplacée par la même opération non linéaire S' lors de chaque tour. Ceci est avantageux car le remplacement d'une opération non linéaire par une autre, différente à chaque tour, est coûteux en termes de performances, et conserver la même permet de maintenir une rapidité acceptable notamment pour des dispositifs à ressources contraintes, tels que des cartes à puce d'entrée de gamme n'ayant qu'un processeur très lent et peu de mémoire.

Dans les deux modes de réalisation précédents, on peut s'arranger pour déterminer une opération non linéaire S' telle que c'=c, ce qui simplifie l'opération de démasquage. Il est en tout état de cause nécessaire de démasquer ce que l'on a masqué pour que l'algorithme cryptographique sécurisé produise le même résultat que l'algorithme cryptographique avant sécurisation.

L'invention concerne également un dispositif électronique comprenant une unité d'exécution d'algorithme cryptographique ainsi qu'un module de masquage associé. Le module de masquage est agencé pour mettre en oeuvre une transformation de type x'=x.L+c, x étant une donnée à masquer, x' étant une donnée masquée correspondante, c étant un mot de code compris dans un code linéaire C, et L étant une matrice composée de vecteurs linéairement indépendants non compris dans le code linéaire C.

Les modes de réalisations décrits précédemment pour le procédé peuvent être transposés au dispositif, en particulier selon un mode de réalisation, le module de masquage est agencé pour choisir le mot de code c aléatoirement lors de chaque exécution de l'algorithme cryptographique. Selon un mode de réalisation, le module de masquage est agencé pour choisir la matrice L aléatoirement une seule fois pour toutes les exécutions de l'algorithme cryptographique. Selon un mode de réalisation, le module de masquage est agencé pour effectuer le masquage avant la mise en oeuvre de l'algorithme cryptographique, et pour effectuer une opération de démasquage après la mise en oeuvre de l'algorithme cryptographique. Selon un mode de réalisation, l'algorithme cryptographique de l'unité d'exécution est un algorithme mettant en oeuvre une opération non linéaire S, et le module de masquage est agencé pour remplacer l'opération non linéaire S par une opération non linéaire S' telle que S'(x.L+c) = S(x).L+c', c' étant un mot de code du code linéaire C. Selon un mode de réalisation, l'algorithme cryptographique de l'unité d'exécution comprend plusieurs tours, chaque tour comprenant une même opération non linéaire S, et le module de masquage est agencé pour remplacer l'opération non linéaire S par la même opération non linéaire S' lors de chaque tour. Selon un mode de réalisation possible des deux modes de réalisation précédents, c'=c.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre un procédé selon l'invention
- la figure 2 illustre un dispositif selon l'invention ainsi qu'un équipement pour tenter de soumettre ce dispositif à une attaque

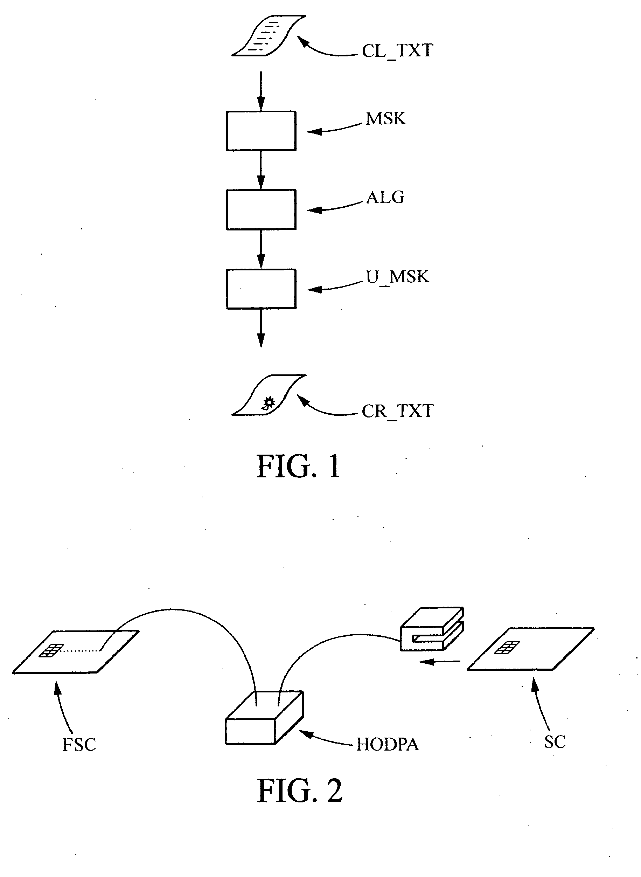

La figure 1 montre de façon très schématique un procédé selon l'invention. Selon ce procédé, on commence par masquer une donnée CL_TXT (de l'anglais « clear text », ou texte en clair), par exemple une donnée à chiffrer, lors d'une étape MSK, puis l'on exécute l'algorithme cryptographique ALG à protéger (par exemple un algorithme de chiffrement tel que l'AES), puis enfin on démasque le résultat (étape U_MSK, de l'anglais « unmask ») afin de retrouver la valeur CR_TXT (de l'anglais « cipher text », soit un texte chiffré) qui aurait été normalement produit par l'algorithme cryptographique ALG en l'absence de masquage. Autrement dit, si l'on supprime les deux étapes de masquage MSK par code linéaire et de démasquage U_MSK (par décodage correspondant), pour ne conserver que l'algorithme cryptographique ALG, on obtient bien la même sortie CR_TXT à partir de l'entrée CL_TXT, ce qui signifie que l'algorithme est sécurisé par masquage sans affecter son interopérabilité. On peut intégrer les opérations de masquage MSK et de démasquage U_MSK au sein de l'algorithme cryptographique et obtenir ainsi une implémentation particulière de l'algorithme cryptographique ALG fonctionnellement identique à celles de l'état de l'art, mais beaucoup plus sécurisée contre les attaques par écoutes passives, et en particulier les plus élaborées d'entre elles, telles que les attaques HODPA. La représentation de la figure 1 est simplifiée dans la mesure où dans les cas les plus fréquents, ce n'est pas exactement l'algorithme cryptographique ALG connu qui est exécuté à l'étape ALG, mais une version modifiée de cet algorithme, afin de permettre le masquage/démasquage en présence d'opérations non linéaires.

La figure 2 montre une carte à puce SC (de l'anglais « smart card ») selon l'invention. Une carte à puce est un exemple possible de dispositif pour lequel l'invention est particulièrement avantageuse, compte tenu de ses nombreuses applications dans le domaine de la cryptographie (cartes SIM authentifiant un utilisateur de téléphone portable vis-à-vis d'un opérateur, carte bancaire authentifiant le porteur lors d'une transaction financière, cartes de santé, etc.). Cependant l'invention s'applique à tout autre dispositif portable, tel qu'un passeport électronique, un visa électronique, un permis de conduire électronique, une clé USB sécurisée, une carte secure MMC, un jeton sécurisé (token), etc. L'invention peut également être mise en oeuvre dans un ordinateur personnel, un serveur, un accélérateur SSL, etc. La majorité des ordinateurs personnels est non sécurisée, en comparaison avec un dispositif sécurisé tel qu'une carte à puce. Ceci rend ces ordinateurs vulnérables à des attaques beaucoup plus simples à mettre en oeuvre que les attaques contre lesquelles l'invention permet de se protéger, telles que des attaques purement logicielles. Ces attaques logicielles (par virus, chevaux de Troie, etc.) peuvent souvent être menées à bien à distance sans nécessiter aucun accès physique. Il pourrait semblait saugrenu de chercher à se protéger contre des attaques complexes et contraignantes de type écoutes passives alors qu'un attaquant situé sur un autre continent pourrait prendre le contrôle de l'ordinateur à distance et extraire des informations critiques de manière bien plus simple et bien moins dangereuse pour lui (pas d'intrusion, pas de vol de dispositif, etc.). Cependant certains ordinateurs personnels (par exemple dans des environnements militaires) sont fortement sécurisés contre les attaques purement logicielles, et dans ce contexte les protéger également contre des attaques par écoutes passives est avantageux.

La figure 2 montre également une fausse carte à puce FSC (« fake smart card » en anglais), qui n'est en fait qu'une connectique ayant la forme d'une carte à puce et ayant des contacts électriques aux positions normalisées, ces contacts étant connectés aux contacts correspondants de la véritable carte à puce SC via un équipement HODPA permettant une attaque de type HODPA. L'équipement HODPA se branche ainsi en série entre la véritable carte à puce SC prise pour cible par un attaquant, et une fausse carte FSC réalisant l'interface physique entre le terminal censé accueillir la véritable carte à puce SC et cette véritable carte à puce SC. Le but de la fausse carte à puce FSC est dans cet exemple de pouvoir espionner une consommation de courant de la carte à puce SC sans avoir à modifier le terminal utilisant la carte (et en particulier le lecteur de carte à puce). Selon l'invention, la carte à puce SC est plus résistante aux attaques de ce type et il est très difficile pour l'équipement HODPA d'extraire les informations ciblées de la carte à puce SC.

L'invention reposant sur l'utilisation d'un code linéaire, il est utile de rappeler qu'un code linéaire est un type particulier de codes correcteurs d'erreurs. Un code linéaire C est un sous espace vectoriel d'un espace vectoriel $F_q^n$ de dimension n, Fq étant le corps fini à q éléments. Il peut s'agir du corps $F_2$ (q=2), on dit alors que le code linéaire est un code binaire. Notons n-k la dimension du sous espace vectoriel correspondant au code linéaire C. Le code linéaire C est défini par une matrice génératrice pouvant être notée G. L'élément c (et plus généralement tout élément du code C) peut se décomposer sous forme de combinaison linéaire $c = m_1v_1 + m_2v_2 + ... + m_{n-k}v_{n-k}$ d'une base de vecteurs ($v_1$, $v_2$, ..., $v_{n-k}$), soit c=mG, avec m = ($m_1$, $m_2$, ..., $m_{n-k}$), G étant la matrice génératrice (de taille (n-k)*n). On définit également une matrice de parité H de taille n*k, telle que pour tout élément c du code linéaire C, c.H=0, et réciproquement si c.H=0 alors c est un élément du code linéaire C.

En général, m représente un message encodé par le code linéaire C. Cependant, dans le contexte de l'invention, le mot de code c n'a pas besoin de représenter un message particulier. Ainsi, il peut être tiré au hasard, d'une manière similaire à ce qui se pratique dans le codage employé pour un canal à jarretière (en anglais, « wiretap channel »). Dans le contexte d'un canal à jarretière, on cherche à transmettre un message d'un émetteur à un récepteur, en présence d'un espion potentiel capable d'intercepter les communications. On prend pour hypothèse que le canal de transmission n'est pas parfait. On s'arrange pour que le codage canal soit tel que, compte tenu du taux d'erreur binaire au niveau du message intercepté, ce dernier ne puisse pas être décodé par l'attaquant, alors que, compte tenu du taux d'erreur binaire au niveau du récepteur, le message reçu au niveau du récepteur puisse être décodé.

Selon un mode de réalisation de l'invention, les données protégées par le code linéaire ne sont utilisées que de façon interne à l'algorithme cryptographique. Il n'y a donc pas de notion d'émetteur légitime ni de récepteur légitime de la donnée protégée par un codage pour canal à jarretière, ni de notion de taux d'erreur. Le code linéaire est utilisé au sein même du calcul d'un algorithme cryptographique, qui n'a en général pas besoin de communiquer avec d'autres entités lors de l'exécution de l'algorithme lui-même. Ceci n'exclut pas, si le dispositif est multitâche, que le dispositif communique avec l'extérieur en même temps qu'il met en oeuvre l'algorithme cryptographique. Ceci n'exclut pas non plus qu'un dispositif mette en oeuvre un protocole sécurisé (tel qu'un protocole d'échange de clé, par exemple de type Diffie-Hellman, ou basé sur de la cryptographie symétrique), dans le cadre duquel des successions d'opérations cryptographiques sont effectuées par deux parties, qui s'échangent des résultats au fur et à mesure du protocole sécurisé afin d'aboutir par exemple à une clé commune en fin de protocole sécurisé. Dans ce cadre, l'invention peut être utilisée pour protéger chaque opération cryptographique effectuée dans le cadre du protocole. Par abus de langage, il est possible de parler d'algorithme cryptographique en parlant d'un protocole sécurisé tel que défini ci-dessus, cependant au sens de l'invention il ne s'agit pas là d'un algorithme cryptographique mais bien d'un protocole mettant en oeuvre une succession d'algorithmes cryptographiques. Au sein d'un algorithme cryptographique modifié, il n'y a en général pas d'émission volontaire des données protégées par le codage canal à travers un quelconque canal de communication. En principe il n'y a donc aucune perte de données, à moins par exemple d'être en présence d'une attaque par fautes (telle qu'une attaque DFA), ou d'exécuter l'algorithme cryptographique sur un dispositif électronique défectueux. Abstraction faite de ces situations particulières, on peut donc considérer qu'on a un canal virtuel (puisqu'en réalité il n'y a pas réellement de transmission des données masquées) parfait. En revanche, pour l'attaquant qui tente de mettre en oeuvre une attaque par écoute passive, il existe un canal de transmission, qui est le canal caché utilisé (par exemples les émissions électromagnétiques ou la consommation de courant, espionnée(s) par une attaque HODPA). Ce canal n'est pas parfait, on peut même considérer qu'en général il est relativement bruité et perturbé par les nombreuses contremesures qui sont typiquement présentes dans les dispositifs électroniques.

Selon un mode de réalisation, afin de manipuler une donnée sensible x de k bits au sein d'un algorithme cryptographique tout en tolérant une fuite sur au plus mu bits, on procède ainsi:

- on fixe un code linéaire C de matrice génératrice G de taille (n-k)*n et de matrice de parité H de taille n*k telle que toutes ses sous-matrices de taille (n-mu)*k (à savoir les sous-matrices ayant (n-mu) lignes et k colonnes) soient de rang k,
- on fixe $L_1$, $L_2$, ... $L_k$ k vecteurs linéairement indépendants de n bits et non compris dans le code linéaire C,
- on choisit c=mG, un mot de code tiré au hasard,
- on encode alors la donnée sensible x, représentée sous la forme d'un vecteur ($x_1$, $x_2$, ... $x_k$), comme x'= x.L + c, avec x.L= $x_1$.Li + ... + $x_k$.$L_k$. Dans le cas d'un code linéaire C qui est un code binaire (corps $F_2$), l'opération « + » peut typiquement être une opération de ou exclusif.

Ce mode de réalisation est avantageux, car il permet de tolérer un nombre de bits de fuites jusqu'à mu=n-k avec n arbitrairement grand.

La donnée sensible x peut être par exemple une donnée en clair CL_TXT que l'on cherche à chiffrer à l'aide de l'algorithme cryptographique ALG à protéger. Cependant, il peut également s'agir d'autres informations, par exemple il peut s'agir d'une clé cryptographique manipulée durant l'algorithme cryptographique ALG, ou d'une sous-clé telle qu'une clé de tour. Il peut également s'agir d'une donnée chiffrée à déchiffrer par l'algorithme cryptographique ALG (par exemple un algorithme AES), d'une donnée (en clair ou chiffrée) que l'on souhaite signer, ou d'une donnée signée dont on souhaite vérifier la signature, etc.

Étant donnée une matrice génératrice G du code linéaire C, tirer aléatoirement un mot c du code linéaire C peut simplement consister à tirer aléatoirement un vecteur m dans l'espace vectoriel $F_q^{n-k}$, puis à calculer c=mG. Ceci peut être fait à chaque utilisation de l'algorithme cryptographique.

Afin de déterminer les k vecteurs linéairement indépendants $L_1$, $L_2$, ... $L_k$ non compris dans le code linéaire C qui composent la matrice L, on peut tirer aléatoirement un premier vecteur $L_{test}$, puis vérifier si ce vecteur est dans le code en y appliquant la matrice de parité H (c'est-à-dire en calculant $L_{test}$H). Si le résultat est nul alors le vecteur $L_{test}$ est dans le code linéaire C et l'on recommence en tirant à nouveau un vecteur aléatoire. Dans le cas contraire, on définit $L_1$=$L_{test}$ et l'on recommence une génération de vecteur $L_{test}$ jusqu'à ce que l'on trouve à nouveau un vecteur qui n'est pas dans le code linéaire C, puis l'on peut exécuter un algorithme tel qu'un algorithme de pivot de Gauss pour déterminer si les vecteurs générés jusque là (pour l'instant $L_1$ et le dernier $L_{test}$) sont liés. S'ils le sont, on abandonne le dernier vecteur généré $L_{test}$ et l'on en tire à nouveau un au hasard (jusqu'à ce que l'on tombe sur un vecteur $L_{test}$ qui n'est pas dans le code linéaire C). Sinon, on définit $L_2$=$L_{test}$ et l'on tire un nouveau vecteur aléatoire $L_{test}$, jusqu'à ce qu'il ne soit pas dans le code linéaire, puis l'on calcule un pivot de Gauss sur la base de tous les vecteurs générés jusque là ($L_1$ et $L_2$, dont on sait en fait par construction qu'ils ne sont pas liés, plus le dernier $L_{test}$), et ainsi de suite jusqu'à ce que l'on ait k vecteurs indépendants. Les k vecteurs linéairement indépendants $L_1$, $L_2$, ... $L_k$ peuvent être choisis une fois pour toutes pour chaque dispositif cible. Par exemple pour une carte à puce, les vecteurs pourraient être calculés (de façon distincte) pour chaque carte à puce lors de l'étape dite de personnalisation de cette carte à puce. Ils peuvent également être régénérés de temps à autres, ainsi qu'il a été précédemment expliqué.

L'invention est particulièrement avantageuse dans le contexte des algorithmes de chiffrement/déchiffrement symétrique tels que l'algorithme AES.

Les grandes étapes d'un algorithme AES conventionnel (très bien connu de l'état de la technique) sont:

*1. AddRK(K0)=AddRoundKey(K0)*
*2. pour i allant de 1 a 9:*

> *(a) S=SubBytes ;*
> *(b) SR=ShiftRows ;*
> *(c) MC=MixColumns ;*
> *(d) AddRK(Ki).*

*3. S;*
*4. SR;*
*5. AddRK(K10)*

Ainsi, après avoir réalisé, dans une étape préliminaire non représentée ci-dessus, une opération de « key expansion » durant laquelle on dérive des clés de tour K0...K10 à partir d'une clé de chiffrement donnée, on reconnaît l'opération AddRoundKey qui consiste à combiner chaque octet de l'état avec une clé de tour (à l'aide d'un ou exclusif). On reconnaît ensuite une succession de neuf tours, chaque tour comprenant l'opération SubBytes (qui est une opération non linéaire durant laquelle chaque octet est remplacé par un autre en fonction d'une table), l'opération ShiftRows, qui réalise une transposition durant laquelle chaque ligne de la matrice d'état est décalée cycliquement, l'opération MixColumns (qui réalise dans chaque colonne de la matrice d'état une combinaison des quatre octets de la colonne), et enfin l'opération AddRoundKey déjà décrite. A l'issue des neuf tours, l'algorithme AES exécute encore l'opération SubBytes, suivie de l'opération ShiftRows, puis de l'opération AddRoundKey.

Selon un mode de réalisation, on protège l'algorithme AES de bout en bout de la façon suivante.

On effectue d'abord une pré-configuration. En effet, contrairement au cas du masquage additif classique de l'état de l'art, on est amené à travailler sur des variables intermédiaires dans une dimension différente de celle utilisée pour les variables intermédiaires de l'algorithme AES classique. Cette pré-configuration peut n'être effectuée qu'une fois pour toutes (c'est-à-dire une seule fois indépendamment du nombre de fois que l'algorithme AES sera ultérieurement utilisé). La pré-configuration consiste par exemple à générer de nouvelles opérations AddRK', SR' et MC' telles que

$AddRK'(K)=AddRK(K). L$

$SR'(x.L)=SR(x).L$

$MC'(x.L)=MC(x).L$

Ces calculs sont faciles à effectuer (et donc peu coûteux en performance) car les opérations sont linéaires. Cette étape de pré-configuration peut être effectuée par exemple en usine, lors d'une étape de masquage d'un composant électronique amené à mettre en oeuvre ce mode de réalisation, les opérations modifiées AddRK', SR' et MC' se trouvant alors par exemple en mémoire ROM, au sein d'un système d'exploitation de carte à puce. Il est également possible de réaliser ces opérations AddRK', SR' et MC' sous forme électronique (par exemple en logique câblée), ce qui présente généralement l'avantage d'un fonctionnement plus rapide que lorsque l'on passe par l'intermédiaire d'un logiciel exécuté par un processeur.

Ensuite, on effectue une étape préliminaire à chaque changement de masques (ceci peut être fait par exemple à chaque utilisation de l'algorithme AES, ou moins fréquemment, en particulier si l'on a choisi un paramètre n suffisamment grand). L'étape préliminaire peut consister par exemple à tirer aléatoirement deux mots de codes c et c' et à générer S' tel que $S'(x.L+c)=S(x).L+c'$ pour tout x (ici le même S' est utilisé à chaque tour/rond de l'algorithme pour des raisons de performances, cependant on pourrait tout à fait utiliser un S' différent pour chaque tour, ce qui permettrait en général d'accroître légèrement la sécurité).

Enfin, on effectue l'étape de chiffrement d'une donnée x par l'algorithme AES modifié selon l'invention de la manière suivante.

> 0. calcul de x. L + c à partir de x
> 1. AddRK'(KO)
> 2. pour i allant de 1 a 9:
>
>> (a) S' ;
>> (b) SR' ;
>> (c) MC' ;
>> (d) AddRK'(Ki)
>> (e) x = x + c + MC'(SR'(c'))
>
> 3. S';
> 4. SR';
> 5. AddRK'(K10).
> 6. Appliquer la matrice de parité H pour obtenir le résultat final

Ainsi, à l'étape 0, on effectue un masquage à l'aide d'un code linéaire. A l'étape 2(e) on corrige le masquage pour tenir compte du fait que l'opération non linéaire utilise une constante c' différente de celle (constante c) utilisée lors du masquage initial à l'étape 0. A l'étape 6, on effectue une projection de la donnée résultante grâce à la matrice de parité. Ceci élimine toutes les composantes qui se trouvent dans le code linéaire, et l'on récupère ainsi les données qui auraient été produites par l'algorithme AES en l'absence de masquage. A l'étape 6, après l'application de la matrice de parité H, on peut procéder à l'inversion de la matrice résultante (x.L).H.

On peut également ajouter un masque (un autre mot de code) sur les opérations utilisant la clé (en particulier l'opération AddRK'), ce qui renforce encore le masquage en le rendant plus difficile à attaquer. Dans ce cas, on peut effectuer l'étape de chiffrement d'une donnée x par l'algorithme AES modifié selon l'invention de la manière suivante.

> 0. calcul de x. L + $c_1$ à partir de x, $c_1$ étant un mot de code aléatoire

1. $AddRK'(K0)+c_2$, avec $c_1+c_2=c$
2. pour i allant de 1 a 9:

    (a) S' ;
    (b) SR' ;
    (c) MC' ;
    (d) $AddRK'(Ki)+c_2$
    (e) $x = x + c_1 + MC'(SR'(c'))$

3. S';
4. SR';
5. $AddRK'(K10)+c_3$, avec $c_3$ aléatoire.
6. Appliquer la matrice de parité H pour obtenir le résultat final

Le code peut être choisi de façon à minimiser l'opération (e).

Dans certaines configurations, au lieu d'effectuer l'étape (e) : $x = x + c + MC'(SR'(c'))$, il est possible d'appliquer à l'étape (e) une fonction D(x,c) prenant en entrée x et le mot de code c mais qui ne prend pas en entrée le mot c'. Ceci peut se réaliser par exemple en utilisant une matrice de parité associée au code comprenant tous les MC'(SR'(cc)), où cc parcourt l'ensemble des mots du code de départ. L'avantage de ce mode de réalisation et qu'il permet d'éviter de devoir conserver la valeur c'.

Un exemple simple de mise en oeuvre (où en particulier SR' et MC' se déduisent directement de SR et MC) correspond au cas où x.L vaut [x,0...0] (x suivi de n-k zéros).

Bien entendu, la présente invention ne se limite pas à la forme de réalisation décrite ci-avant à titre d'exemple ; elle s'étend à d'autres variantes.

Ainsi, il a été décrit ci-avant un procédé pour sécuriser une étape de chiffrement AES, mais il est possible de sécuriser de la même façon une étape de déchiffrement AES. De plus, le mode de réalisation décrit se rapporte à l'algorithme AES, mais l'invention s'applique à toute sorte d'algorithmes cryptographiques, et en particulier à l'algorithme DES (et sa variante 3DES) et à l'algorithme RC4, mais également à des algorithmes asymétriques ou a des fonctions de hachage (telles que SHA-1, MD5, SHA-256 ou RIPEMD-160) dont on peut souhaiter protéger notamment certaines sous fonctions linéaires.

De plus, le procédé selon l'invention n'est pas exclusif de l'utilisation d'autres procédés. Par exemple il est possible de combiner le procédé selon l'invention avec d'autres contremesures telles que le masquage additif selon l'état de l'art. On peut par exemple classifier les données manipulées par niveau de sensibilité, et protéger les moins sensibles des données sensibles par un simple masquage additif, les données assez sensibles par un masquage selon l'invention, et les données les plus sensibles par un double masquage des données (à la fois par un masquage additif classique et par un masquage selon l'invention). Toutes les combinaisons sont envisageables.

**Revendications**

1. Procédé de sécurisation de l'exécution d'un algorithme cryptographique (ALG) contre des écoutes passives, le procédé mettant en oeuvre un masquage (MSK) de données traitées par l'algorithme cryptographique (ALG), le procédé étant **caractérisé en ce que** le masquage (MSK) desdites données comprend une étape de transformation de type x'=x.L+c, x étant une donnée à masquer (CL_TXT), x' étant une donnée masquée correspondante, c étant un mot de code compris dans un code linéaire C, et L étant une matrice composée de vecteurs linéairement indépendants non compris dans le code linéaire C.

2. Procédé de sécurisation selon la revendication 1, dans lequel le mot de code c est choisi aléatoirement lors de chaque exécution de l'algorithme cryptographique (ALG).

3. Procédé de sécurisation selon l'une des revendications précédentes, dans lequel la matrice L est choisie aléatoirement une seule fois pour toutes les exécutions de l'algorithme cryptographique (ALG).

4. Procédé de sécurisation selon l'une des revendications précédentes, dans lequel le masquage est effectué avant la mise en oeuvre de l'algorithme cryptographique (ALG), et une opération de démasquage (U_MSK) est effectuée après la mise en oeuvre de l'algorithme cryptographique.

5. Procédé de sécurisation selon l'une des revendications précédentes, dans lequel l'algorithme cryptographique (ALG) est un algorithme mettant en oeuvre une opération non linéaire S, l'opération non linéaire S étant remplacée par une opération non linéaire S' telle que S'(x.L+c) = S(x).L+c', c' étant un mot de code du code linéaire C.

6. Procédé de sécurisation selon la revendication 5, dans lequel l'algorithme cryptographique (ALG) comprend plusieurs tours, chaque tour comprenant une même opération non linéaire S, l'opération non linéaire S étant remplacée par la même opération non linéaire S' lors de chaque tour.

7. Procédé de sécurisation selon la revendication 5 ou 6, dans lequel c'=c.

8. Dispositif électronique (SC) comprenant une unité d'exécution d'algorithme cryptographique ainsi qu'un module de masquage associé, **caractérisé en ce que** le module de masquage est agencé pour mettre en oeuvre une transformation de type x'=x.L+c, x étant une donnée à masquer, x' étant une donnée masquée correspondante, c étant un mot de code compris dans un code linéaire C, et L étant une matrice composée de vecteurs linéairement indépendants non compris dans le code linéaire C.

9. Dispositif électronique (SC) selon la revendication 8, dans lequel le module de masquage est agencé pour choisir le mot de code c aléatoirement lors de chaque exécution de l'algorithme cryptographique (ALG).

10. Dispositif électronique (SC) selon la revendication 8 ou 9, dans lequel le module de masquage est agencé pour choisir la matrice L aléatoirement une seule fois pour toutes les exécutions de l'algorithme cryptographique (ALG).

11. Dispositif électronique (SC) selon l'une des revendications 8 à 10, dans lequel le module de masquage est agencé pour effectuer le masquage (MSK) avant la mise en oeuvre de l'algorithme cryptographique (ALG), et pour effectuer une opération de démasquage (U_MSK) après la mise en oeuvre de l'algorithme cryptographique (ALG).

12. Dispositif électronique (SC) selon l'une des revendications 8 à 11, dans lequel l'algorithme cryptographique (ALG) de l'unité d'exécution est un algorithme mettant en oeuvre une opération non linéaire S, et dans lequel le module de masquage est agencé pour remplacer l'opération non linéaire S par une opération non linéaire S' telle que S'(x.L+c) = S(x).L+c', c' étant un mot de code du code linéaire C.

13. Dispositif électronique (SC) selon la revendication 12, dans lequel l'algorithme cryptographique (ALG) de l'unité d'exécution comprend plusieurs tours, chaque tour comprenant une même opération non linéaire S, et dans lequel le module de masquage est agencé pour remplacer l'opération non linéaire S par la même opération non linéaire S' lors de chaque tour.

14. Dispositif électronique (SC) selon la revendication 12 ou 13, dans lequel c'=c.

**Patentansprüche**

1. Verfahren zur Sicherung der Ausführung eines kryptographischen Algorithmus (ALG) gegen passives Mithören, wobei das Verfahren eine Maskierung (MSK) von durch den kryptographischen Algorithmus (ALG) verarbeiteten Daten durchführt, wobei das Verfahren **dadurch gekennzeichnet ist, dass** die Maskierung (MSK) der Daten einen Umwandlungsschritt der Art x'=x.L+c enthält, wobei x ein zu maskierender Datenwert (CL_TXT), x' ein entsprechender maskierter Datenwert, c ein in einem linearen Code C enthaltenes Codewort und L eine Matrix ist, die aus nicht im linearen Code C enthaltenen, linear unabhängigen Vektoren zusammengesetzt ist.

2. Sicherungsverfahren nach Anspruch 1, wobei das Codewort c bei jeder Ausführung des kryptographischen Algorithmus (ALG) zufällig gewählt wird.

3. Sicherungsverfahren nach einem der vorhergehenden Ansprüche, wobei die Matrix L ein einziges Mal zufällig für alle Ausführungen des kryptographischen Algorithmus (ALG) gewählt wird.

4. Sicherungsverfahren nach einem der vorhergehenden Ansprüche, wobei die Maskierung vor der Durchführung des kryptographische Algorithmus (ALG) ausgeführt wird, und eine Demaskierungsoperation (U_MSK) nach der Durchführung des kryptographischen Algorithmus ausgeführt wird.

5. Sicherungsverfahren nach einem der vorhergehenden Ansprüche, wobei der kryptographische Algorithmus (ALG) ein Algorithmus ist, der eine nicht lineare Operation S durchführt, wobei die nicht lineare Operation S durch eine derartige nicht lineare Operation S' ersetzt wird, dass gilt S'(x.L+c) = S(x).L+c', wobei c' ein Codewort des linearen Codes C ist.

6. Sicherungsverfahren nach Anspruch 5, wobei der kryptographische Algorithmus (ALG) mehrere Durchgänge enthält, wobei jeder Durchgang die gleiche nicht lineare Operation S enthält, wobei die nicht lineare Operation S bei jedem Durchgang durch die gleiche nicht lineare Operation S' ersetzt wird.

7. Sicherungsverfahren nach Anspruch 5 oder 6, wobei gilt c'=c.

8. Elektronische Vorrichtung (SC), die eine Einheit zur Ausführung eines kryptographischen Algorithmus sowie ein zugeordnetes Maskierungsmodul enthält, **dadurch gekennzeichnet, dass** das Maskierungsmodul eingerichtet ist, um eine Umwandlung der Art x' = x.L+c durchzuführen, wobei x ein zu maskierender Datenwert, x' ein entsprechender maskierter Datenwert, c ein in einem linearen Code C enthaltenes Codewort und L eine Matrix ist, die aus linear unabhängigen Vektoren zusammengesetzt ist, die nicht im linearen Code C enthalten sind.

9. Elektronische Vorrichtung (SC) nach Anspruch 8, wobei das Maskierungsmodul eingerichtet ist, um das Codewort c bei jeder Ausführung des kryptographischen Algorithmus (ALG) zufällig zu wählen.

10. Elektronische Vorrichtung (SC) nach Anspruch 8 oder 9, wobei das Maskierungsmodul eingerichtet ist, um die Matrix L ein einziges Mal zufällig für alle Ausführungen des kryptographischen Algorithmus (ALG) zu wählen.

11. Elektronische Vorrichtung (SC) nach einem der Ansprüche 8 bis 10, wobei das Maskierungsmodul eingerichtet ist, um die Maskierung (MSK) vor der Durchführung des kryptographischen Algorithmus (ALG) auszuführen, und um eine Demaskierungsoperation (U_MSK) nach der Durchführung des kryptographischen Algorithmus (ALG) auszuführen.

12. Elektronische Vorrichtung (SC) nach einem der Ansprüche 8 bis 11, wobei der kryptographische Algorithmus (ALG) der Einheit zur Ausführung ein Algorithmus ist, der eine nicht lineare Operation S durchführt, und wobei das Maskierungsmodul eingerichtet ist, um die nicht lineare Operation S durch eine derartige nicht lineare Operation S' zu ersetzen, dass gilt S'(x.L+c) = S(x).L+c', wobei c' ein Codewort des linearen Codes C ist.

13. Elektronische Vorrichtung (SC) nach Anspruch 12, wobei der kryptographische Algorithmus (ALG) der Einheit zur Ausführung mehrere Durchgänge enthält, wobei jeder Durchgang die gleiche nicht lineare Operation S enthält, und wobei das Maskierungsmodul eingerichtet ist, um bei jedem Durchgang die nicht lineare Operation S durch die gleiche nicht lineare Operation S' zu ersetzen.

14. Elektronische Vorrichtung (SC) nach Anspruch 12 oder 13, wobei gilt c'=c.

**Claims**

1. Method for securing the execution of a cryptographic algorithm (ALG) against passive sniffing, the method carrying out a masking (MSK) of data processed by the cryptographic algorithm (ALG), said method **characterized by** the masking (MSK) of said data comprising a transformation step of the type x' = x.L+c, where x is data to be masked (CL_TXT), x' is the corresponding masked data, c is a codeword included in a linear code C, and L is a matrix consisting of linearly independent vectors not included in the linear code C.

2. Securing method according to claim 1, wherein the codeword c is chosen randomly during each execution of the cryptographic algorithm (ALG).

3. Securing method according to one of the preceding claims, wherein the matrix L is randomly chosen one time only for all executions of the cryptographic algorithm (ALG).

4. Securing method according to one of the preceding claims, wherein the masking is carried out before the use of the cryptographic algorithm (ALG), and an unmasking operation (U_MSK) is carried out after the use of the cryptographic algorithm (ALG).

5. Securing method according to one of the preceding claims, wherein the cryptographic algorithm (ALG) is an algorithm making use of a nonlinear operation S, said nonlinear operation S being replaced with a nonlinear operation S' such that S'(x.L+c) = S(x).L+c', where c' is a codeword of the linear code C.

6. Securing method according to claim 5, wherein the cryptographic algorithm (ALG) comprises several rounds, each round comprising the same nonlinear operation S, and the nonlinear operation S is replaced with the same nonlinear operation S' during each round.

7. Securing method according to claim 5 or 6, wherein c' = c.

8. Electronic device (SC) comprising a cryptographic algorithm execution unit as well as an associated masking module, wherein the masking module is arranged to implement a transformation of the type x' = x.L+c, where x is data to be masked, x' is the corresponding masked data, c is a codeword included in a linear code C, and L is a matrix consisting of linearly independent vectors not included in the linear code C.

9. Electronic device (SC) according to claim 8, wherein the masking module is arranged to choose the codeword c randomly during each execution of the cryptographic algorithm (ALG).

10. Electronic device (SC) according to claim 8 or 9, wherein the masking module is arranged to choose the matrix L randomly one time only for all executions of the cryptographic algorithm (ALG).

11. Electronic device (SC) according to one of claims 8 to 10, wherein the masking module is arranged to perform the masking (MSK) before the use of the cryptographic algorithm (ALG), and to perform an unmasking operation (U_MSK) after the use of the cryptographic algorithm (ALG).

12. Electronic device (SC) according to one of claims 8 to 11, wherein the cryptographic algorithm of the execution unit is an algorithm making use of a nonlinear operation S, and wherein the masking module is arranged to replace the nonlinear operation S with a nonlinear operation S' such that S'(x.L+c) = S(x).L+c', where c' is a codeword of the linear code C.

13. Electronic device (SC) according to claim 12, wherein the cryptographic algorithm (ALG) of the execution unit comprises several rounds, each round comprising the same nonlinear operation S, and wherein the masking module is arranged to replace the nonlinear operation S with the same nonlinear operation S' during each round.

14. Electronic device (SC) according to claim 12 or 13, wherein c' = c.

CL_TXT

MSK

ALG

U_MSK

CR_TXT

# FIG. 1

FSC

HODPA

SC

# FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- On Second-Order Differential Power Analysis. **MARC JOYE ; PASCAL PAILLIER ; BERRY SCHOENMAKERS.** Cryptographic Hardware and Embedded Systems. Springer-Verlag, 2005, vol. 3659, 293-308